# EUROPÄISCHE PATENTSCHRIFT

(11) **EP 1 277 003 B1**
(45) Veröffentlichungstag und Bekanntmachung des Hinweises auf die Patenterteilung: **14.02.2007**
(21) Anmeldenummer: 00958222.2
(22) Anmeldetag: 08.08.2000
(51) Int. Cl.: F16H 59/10

(54) **ELEKTRONISCHES STEUERGERÄT FÜR EIN KRAFTFAHRZEUG-AUTOMATIKGETRIEBE UND VERFAHREN ZUM ABGLEICHEN EINES POSITIONSERKENNUNGSSENSORS**
ELECTRONIC CONTROL DEVICE FOR A MOTOR VEHICLE AUTOMATIC TRANSMISSION AND METHOD FOR CALIBRATING A POSITION DETECTION SENSOR IN AN ELECTRONIC CONTROL DEVICE FOR A MOTOR VEHICLE AUTOMATIC TRANSMISSION
APPAREIL DE COMMANDE ELECTRONIQUE POUR BOITE AUTOMATIQUE D'AUTOMOBILE ET PROCEDE POUR ECHANTILLONNER UN DETECTEUR D'IDENTIFICATION DE POSITION DANS UN APPAREIL DE COMMANDE ELECTRONIQUE POUR UNE BOITE DE VITESSES AUTOMATIQUE D'AUTOMOBILE

(30) Priorität: 12.08.1999 DE 19938110
(43) Veröffentlichungstag der Anmeldung: 22.01.2003
(73) Patentinhaber: SIEMENS AKTIENGESELLSCHAFT, 80333 München (DE)
(72) Erfinder: LOIBL, Josef, D-94209 Regen (DE); KRAUSE, Dieter, D-93049 Regensburg (DE); JUNGBAUER, Bernd, D-93051 Regensburg (DE)
(86) Internationale Anmeldenummer: PCT/DE2000/002646
(87) Internationale Veröffentlichungsnummer: WO 2001/013011

(56) Entgegenhaltungen:
- EP-A- 1 046 839
- DE-A- 4 340 917
- DE-A- 19 745 537
- DE-C- 19 603 197
- US-A- 4 698 996
- US-A- 5 621 317
- US-A- 5 626 534
- ERB O ET AL: "PLCD, A NOVEL MAGNETIC DISPLACEMENT SENSOR" SENSORS AND ACTUATORS A,CH,ELSEVIER SEQUOIA S.A., LAUSANNE, Bd. A26, Nr. 1 / 03, 1. März 1991 (1991-03-01), Seiten 277-282, XP000246482 ISSN: 0924-4247

## Beschreibung

Die Erfindung betrifft ein elektronisches Steuergerät für ein Kraftfahrzeug-Automatikgetriebe und ein Verfahren zum Abgleichen eines Positionserkennungssensors in einem elektronischen Steuergerät für ein Kraftfahrzeug-Automatikgetriebe.

Automatikgetriebe für Personenkraftfahrzeuge werden üblicherweise elektronisch gesteuert. Die Steuergeräte hierfür waren bisher als sog. "Stand-alone-Einheiten" in einem vor Umwelteinflüssen schützenden Steuerkasten vorgesehen oder wurden direkt im Passagierraum des Fahrzeugs verbaut. In jüngster Zeit wird dazu übergegangen, die Steuerelektronik und die zugehörige Sensorik aus Kosten- und Qualitätsgründen direkt in das Automatikgetriebe zu integrieren. Grundlegende Systemanforderungen für den Betrieb der Elektronik im Getriebe sind die Funktionsfähigkeit über einen breiten Temperaturbereich, z.B. -40°C bis 140°C, die Dichtheit gegenüber Getriebe-ATF-Öl und eine ausreichende Vibrationsfestigkeit, z.B. 30 g. Eine optimierte Temperaturauslegung wird dadurch erreicht, daß die Elektronikschaltung auf dem Keramik-Substrat mit einem Wärmeleitkleber auf eine Metallgrundplatte, z.B. aus Aluminium, aufgeklebt wird.

Neben Drehzahlsensoren, Drucksensoren und Temperatursensoren weisen übliche Getriebesteuerungen für Automatikgetriebe einen Positionserkennungssensor auf, mit dem erfaßt wird, welcher Fahrbereich des Automatikgetriebes eingestellt ist. Letzteres erfolgt beispielsweise durch eine Einstellung des sog. Wählbereichsschalters in eine der Positionen "P" (Park), "R" (Retour), "N" (Neutral) oder "D" (Drive). Der Wählbereichsschalter - im folgenden auch Wählhebel genannt - ist an das Automatikgetriebe mechanisch angebunden, indem er einen linear oder rotartorisch beweglichen Wählschieber betätigt. Dieser ist in den hydraulischen Teil der Getriebesteuerung eingebunden. Durch die Erfassung der Wählschieberposition mittels des Positionserkennungssensors wird dem elektronischen Steuergerät die eingestellte Fahrstufe mitgeteilt.

Bezüglich der Positionserkennung ist es nun bekannt, einen eigenständigen Sensor vorzusehen, der zum Schutz vor dem Umgebungsmedium, nämlich Getriebeöl, öldicht in einem Gehäuse verpackt ist. Auch die elektrische Verbindung des Sensors über entsprechende Leitungen zum Steuergerät muß öldicht ausgelegt sein.

Für die Ausgestaltung der Sensoren sind verschiedene Meßprinzipien denkbar. Aus der Druckschrift DE 196 03 197 C1 ist die Verwendung von Magnetfeldsensoren bekannt, die auf dem Hall-Effekt basieren. Bei derartigen Anordnungen wird die Meßqualität erheblich vom Luftspalt zwischen Magnet und Sensorelement beeinflußt. Daher ist ein als Schieber ausgebildetes Auslöseorgan (PES-Schieber), in dem eine codierte Magnetplatte oder ein Gebermagnet integriert ist, toleranzgenau in Führungsnuten des Sensorgehäuses geführt. In den PES-Schieber greift der getriebeinterne Wählschieber ein, der über ein Gestänge oder einen Bowdenzug starr mit dem Wählhebel im Fahrzeuginnenraum verbunden ist. Wird der Wählhebel von einer Position in eine andere bewegt, so wird über den Wählschieber im Getriebe auch der bewegliche PES-Schieber verstellt, so daß die Getriebeelektronik die neue Wählhebel-Stellung einlesen kann.

Auf dem Hall-Effekt basierende Positionserkennungssensoren sind ebenso wie elektromechanisch auf dem Schalter- oder Schleifer-Prinzip beruhende Positionserkennungssensoren ausschließlich digital ausgeführt. Die Absolutgenauigkeit des Systems ergibt sich entsprechend einer Kette von Toleranzen der beteiligten Elektronik- und Mechanikkomponenten. Eine statische Korrektur nach dem Einbau in das Fahrzeug ist nicht mehr möglich.

Die EP 1 046 839 A2, die den nächstkommenden, nicht vorveröffentlichten Stand der Technik nach Artikel 54 (3) und (4) EPÜ darstellt, umfasst ein elektronisches Steuergerät für ein Kraftfahrzeug-Automatikgetriebe mit einem Gehäuse. Im Gehäuse ist eine Steuerelektronik zum Steuern des Automatikgetriebes und ein Positionserkennungssensor zum Erfassen der Position eines Wählschiebers untergebracht. Der Positionserkennungssensor liefert ein analoges, von der Position des Wählschiebers abhängiges Ausgangssignal und wird mit Hilfe eines Selbstlernalgorithmus in der Steuerelektronik abgeglichen. Die Druckschrift umfasst ferner ein Verfahren zum Abgleich eines derartigen Positionserkennungssensors. In einem Eichvorgang werden mindestens zwei der vorhandenen Schaltstellungen, vorzugsweise die Endstellungen P und D, jeweils angefahren und der korrespondierende Signalpegel oder Spannungswert wird in einem nichtflüchtigen Speicher in der Steuerelektronik abgelegt. Auf Basis der gespeicherten Werte werden die Signalpegel- oder Spannungsbänder für die jeweils angefahrenen Schaltstellungen aktualisiert. Die Spannungsbänder für die nicht angefahrenen Schaltstellungen können aufgrund der linearen Anordnung der Schaltpunkte mit ausreichender Genauigkeit berechnet und die korrespondierenden Spannungswerte ebenfalls in dem nichtflüchtigen Speicher abgelegt werden.

Aus der US 5,626,534 geht ein Verfahren zur Kalibrierung jeder Schalthebelstellung für einen Vorwärtsgang bei einem Kupplungssteuersystem hervor, wobei der Schalthebel aus der Leerlaufstellung der Reihe nach in jede Gangschaltstellung bewegt wird, wobei in oder bei der Bewegung in jede Stellung ermittelt wird, ob vom Bediener eine Schub- oder eine Zugkraft auf den Schalthebel aufgebracht wird, damit entschieden werden kann, auf welche Seite der Schalthebel aus dem Leerlaufstellungsbereich bewegt wurde. Danach wird überprüft, ob der Schalthebel in einen zulässigen Bereich der Schalthebelstellung für den in Frage stehenden Gang gebracht wurde und eine Zeitverzögerung gestartet wurde. Über ein Signal wird ermittelt, welche der Bewegungsendstellung des Schalthebels der spezifischen Gangschaltstellung entspricht. Danach wird die ermittelte Gangschaltstellung auf Kompatibilität mit dem Lastsignal vom Schalthebel überprüft. Basierend auf der ermittelten Bewegungsendstellung des Schalthebels wird dieser ein zulässiger Bereich der Schalthebelstellung für den in Frage stehenden Gang zugewiesen, im Systemspeicher abgespeichert und ein Hinweissignal an den Bediener ausgegeben, welches anzeigt, dass die Kalibrierung dieser spezifischen Schalthebelstellung abgeschlossen wurde und dass die verbleibenden Schaltstellungen jetzt auf die gleiche Weise kalibriert werden können.

Der Erfindung liegt das technische Problem zugrunde, einen Positionserkennungssensor mit hoher Genauigkeit auf einfache und kostengünstige Art und Weise in ein elektronisches Steuergerät einzubinden und ein Verfahren zu schaffen, das einen Abgleich des Sensors nach dem Einbau in das Fahrzeug ermöglicht.

Dieses Problem wird durch ein elektronisches Steuergerät und ein Verfahren mit den Merkmalen der unabhängigen Ansprüche 1 und 5 gelöst. Vorteilhafte Weiterbildungen der Erfindung sind in den Unteransprüchen niedergelegt.

Für Positionserkennungssensoren sind neben digitalen (Hall-Sensor) auch analoge Sensorprinzipien, z.B. auf Basis eines PLCD (permanentmagnetic linear contactless displacementsensor) bekannt. Ein PLCD basiert auf einer Spulenanordnung, die eine integrierte elektronische Auswerteschaltung, z.B. als ASIC-Baustein, enthält und auf Basis der Lage von Gebermagneten relativ zum Sensor ein analoges Ausgangssignal, vorzugsweise ein Spannungssignal, erzeugt.

Bei Positionserkennungssensoren ist die Genauigkeit, mit der die Wählbereiche (P, R, N und D) erfaßt werden können, ein entscheidendes Qualitätsmerkmal. Im Gegensatz zu digitalen Positionserkennungssensoren hat man bei analogen Positionserkennungssensoren die Möglichkeit, den Sensor statisch abzugleichen, um so Fertigungs- und Einbautoleranzen des Positionserkennungssensors im Getriebe und im Fahrzeug weitgehend zu eliminieren und somit die Genauigkeit im System zu erhöhen.

Ein Ausführungsbeispiel der Erfindung wird im folgenden anhand der Figuren erläutert. Es zeigen:
- Figur 1: eine schematische Darstellung eines Steuergeräts mit Mitteln zur Positionserfassung,
- Figur 2: eine Schrägansicht eines Positionserkennungssensors mit PLCD-Sensorelementen,
- Figur 3: eine Kennlinie des Ausgangssignals des PLCD-Sensorelements,
- Figur 4: eine schematische Darstellung der Wählbereiche eines Positionserkennungssensors und
- Figur 5: ein Flußdiagramm des erfindungsgemäßen Verfahrens zum Abgleichen des Positionserkennungssensors.

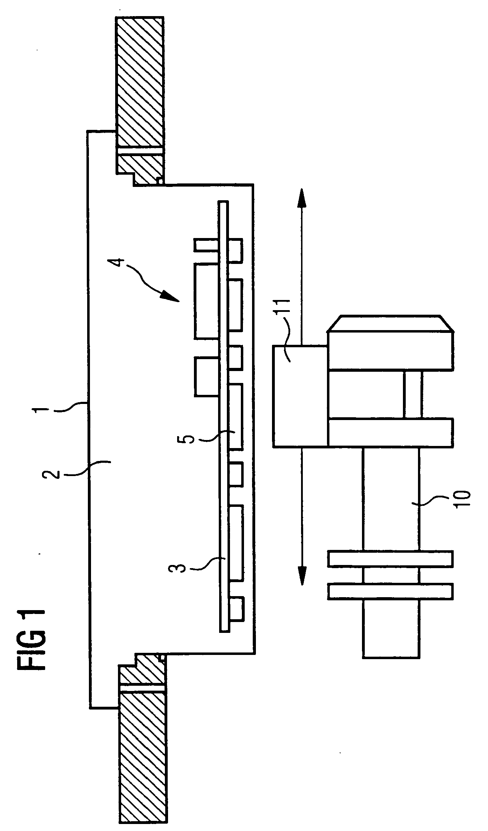

Ein elektronisches Steuergerät für ein Automatikgetriebe eines Kraftfahrzeuges weist ein Gehäuse 1 auf (Figur 1). Der Innenraum 2 des Gehäuses 1 ist hermetisch gegen Flüssigkeitseintritt, also insbesondere öldicht, verschlossen. Im Innenraum 2 ist ein Schaltungsträger 3, z.B. eine Platine oder eine Flex-Leiterfolie, mit einer, schematisch durch Bauelemente dargestellten Steuerelektronik 4 untergebracht. Ein Positionserkennungssensor 5, der als PLCD ausgeführt ist und gegebenenfalls noch eine Ansteuer- und Auswertelektronik aufweist, ist ebenfalls im Innenraum 2 des Gehäuses 1 angeordnet. Vorteilhaft ist der Positionserkennungssensor 5 unmittelbar auf dem Schaltungsträger 3 der Steuerelektronik 4 angeordnet.

Mit Hilfe des Positionserkennungssensors 5 kann die Position eines Wählschiebers 10, der über ein Gestänge oder einen Bowdenzug starr mit einem nicht dargestellten Wählhebel im Fahrzeuginnenraum verbunden ist, erfaßt und der Steuerelektronik mitgeteilt werden. Bei Verwendung von induktiven Sensoren, wie z.B. einem PLCD, ist der Luftspalt zwischen Geberelement und Sensorelement deutlich unkritischer als bei bekannten Hall-Sensoren. Ein Gebermagnet 11 kann daher unmittelbar auf dem Wählschieber 10 montiert werden. Eine toleranzgenaue Führung in einem zusätzlichen PES-Schieber ist nicht zwingend notwendig.

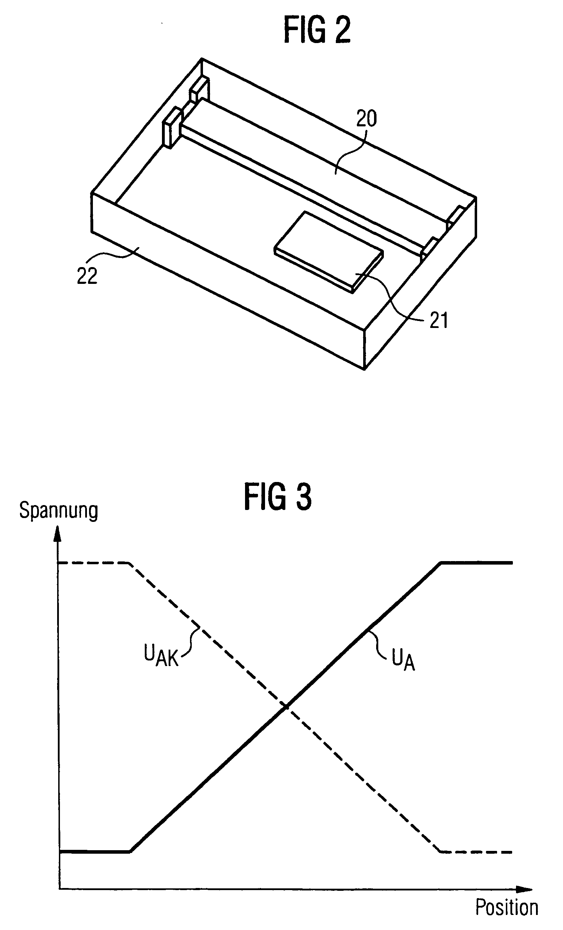

Erfindungsgemäß wird für die Erkennung der Position des Wählschiebers 10 ein analoges Sensorprinzip, z.B. auf Basis eines PLCD, verwendet. Ein derartiger Sensor basiert auf einer Spulenanordnung 20, die zusammen mit einer integrierten elektronischen Auswerteschaltung 21, z.B. in Form eines ASIC-Bausteins, in einem Sensorgehäuse 22 untergebracht ist (Figur 2).

In Figur 3 ist ein mögliches Ausgangssignal des PLCD in Abhängigkeit von der Position des Wählschiebers dargestellt. Dabei kann der Ausgang des Sensorelements aus Sicherheitsgründen als redundante Differenzschnittstelle ausgeführt sein. Dadurch ergibt sich neben einem Ausgangsspannungssignal U_{A} ein Komplementär-Signal U_{AK}. Durch Vergleich des Ausgangsspannungssignals U_{A} mit dem Komplementär-Signal U_{AK} lassen sich Fehlfunktionen des PLCD erkennen. Das lineare Spannungssignal kann durch einen in den PLCD-Baustein integrierten A/D-Wandler auch innerhalb des PLCD in diskrete Ausgangswerte umgesetzt werden. Der Ausgang des Sensorelements ist dann als serielle Schnittstelle oder Busschnittstelle ausgeführt.

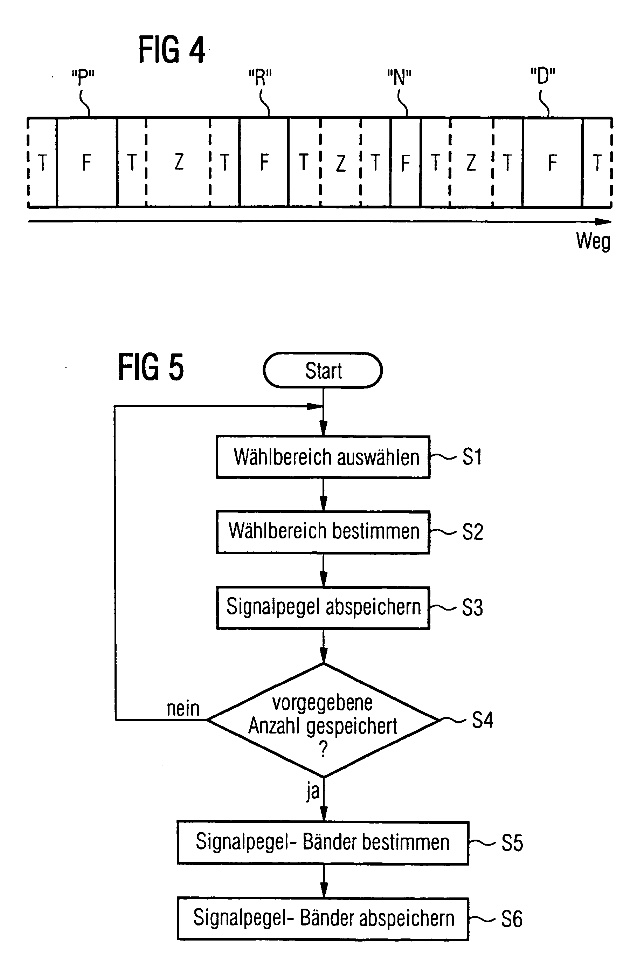

Durch den Wählschieber 10 mit dem Gebermagnet 11 werden linear angeordnete Schaltpunkte vorgegeben. Dabei wird zwischen Fahrstellungen F, Zwischenstellungen Z und Toleranzbereichen T unterschieden (Figur 4). Da der Positionserkennungssensor im Getriebe eines Kraftfahrzeugs ein sicherheitskritisches Teil darstellt, muß eine hohe Zuverlässigkeit und Funktionssicherheit des Positionserkennungssensors gewährleistet sein. Fahrstellungen F und Zwischenstellungen Z des Wählschiebers müssen eindeutig erkannt werden. Im Gegensatz zu digitalen Positionserkennungssensoren, z.B. mit Hall-Elementen, hat man bei analogen Positionserkennungssensoren die Möglichkeit, den Sensor während der Produktion des Fahrzeugs, insbesondere während der Getriebefertigung oder beim Ersatzteilaustausch in Werkstätten statisch abzugleichen, um so die gewünschte Systemgenauigkeit sicherzustellen.

Um den Kalibrierzustand - kalibriert oder unkalibriert - des Positionserkennungssensors 5 rasch und mit geringem Aufwand feststellen zu können, ist in der Steuerelektronik 4 ein Zustandskenner, z.B. in Form eines Software-Bits, das in einem nichtflüchtigen Speicher der Steuerelektronik 4 abgelegt ist, vorgesehen. Solange der Positionserkennungssensor 5 nicht abgeglichen ist, ist dieses Bit beispielsweise auf den logischen Wert Eins gesetzt. In diesem Fall wird die Getriebesteuerung in einen Notlauf-Modus versetzt, der dem Fahrer oder Bediener z.B. über eine Warnlampe im Fahrzeuginnenraum angezeigt wird. Erst wenn der Positionserkennungssensor abgeglichen oder kalibriert wurde und somit eine sichere Funktionsweise und damit ein sicherer Fahrbetrieb gewährleistet ist, wird das Software-Bit z.B. auf den logischen Wert Null zurückgesetzt und die Getriebesteuerung in den normalen Betriebsmodus überführt.

Zum Abgleichen des Positionserkennungssensors 5 ist in der Steuerelektronik 4 ein Kalibrierprogramm hinterlegt. Dieses wird z.B. über ein Startsignal über eine serielle Schnittstelle des Positionserkennungssensors 5 eingeleitet. Um bei dem Abgleich eine maximale Genauigkeit sicherzustellen, muß jede der vorhandenen Schaltstellungen und damit jeder der zugehörigen Wählbereiche P, R, N und D mehrmals, vorzugsweise zwei- bis fünfmal, angewählt werden. Das hierzu nötige Verstellen des Wählhebels erfolgt üblicherweise manuell durch den Bediener, kann aber auch automatisiert, z.B. durch einen Roboter, ausgeführt werden. Ist über den Wählhebel ein Wählbereich ausgewählt (Schritt S1), so wird in einem Schritt S2 bestimmt, in welchem der Wählbereiche sich der Wählschieber momentan befindet. Hierzu wird beispielsweise die resultierende Ausgangsspannung des Positionserkennungssensors 5 mit jeweils unteren und oberen Spannungsgrenzwerten der einzelnen Wählbereiche P, R, N und D verglichen. Diese Grenzwerte können dabei im nichtflüchtigen Speicher der Steuerelektronik 4 standardmäßig abgelegt sein. Liegt der Signalpegel der Ausgangsspannung des Positionserkennungssensors 5 über eine vorgegebene Zeitdauer konstant an, so wird der entsprechende Signalpegel in einem Schritt S3 in einem flüchtigen Speicher der Steuerelektronik 4 abgelegt. Anschließend werden die Schritte S1, S2 und S3 so oft wiederholt, bis zu jedem der Wählbereiche P, R, N und D die vorgegebene Anzahl, z.B. zwei bis fünf, abgespeicherter Signalpegel im nichtflüchtigen Speicher der Steuerelektronik vorliegt (Schritt S4). Vorteilhaft wird der Wählhebel dabei nacheinander in jede der vorhandenen Schaltstellungen bewegt und dieser Vorgang, entsprechend der geforderten Anzahl an gespeicherten Signalpegeln je Wählbereich, wiederholt. Dabei wird in jeder einzelnen Schaltstellung solange verweilt, daß der sich einstellende Signalpegel für eine vorgegebene Zeitdauer konstant anliegt und im nicht flüchtigen Speicher der Steuerelektronik 4 abgelegt werden kann.

Ist im flüchtigen Speicher der Steuerelektronik 4 zu jedem Wählbereich die vorgegebene Anzahl an Signalpegeln abgespeichert, werden in einem Schritt S5 auf Basis der gespeicherten Werte Signalpegel-Bänder für die jeweiligen Wählbereiche bestimmt. Hierzu kann beispielsweise der Mittelwert aus den für den jeweiligen Wählbereich abgespeicherten Signalpegeln gebildet werden und um diesen Mittelwert ein vorgegebener Toleranzbereich festgelegt werden. Ebenso ist es denkbar, die jeweiligen Minimal- und Maximalwerte der Signalpegel als Extremwerte für die Signalpegel-Bänder zu verwenden. Die ermittelten Signalpegel-Bänder werden dann in einem Schritt S6 im nichtflüchtigen Speicher der Steuerelektronik 4 abgelegt. Somit ist der Abgleichvorgang abgeschlossen, der Zustandskenner wird zurückgesetzt und die Getriebesteuerung in den normalen Funktionszustand überführt.

Ein analoges Verfahren ist auch anzuwenden, wenn der Ausgang des Positionserkennungssensors 5 als serielle Schnittstelle oder Busschnittstelle ausgeführt ist und diskrete Ausgangswerte an die Steuerelektronik 4 übermittelt werden.

Das anhand der Figur 5 beschriebene Verfahren zum Abgleichen des Positionserkennungssensors 5 ist lediglich beispielhaft zu sehen. Für die Qualität des Abgleichens ist es entscheidend, daß die Signalpegel-Bänder für die einzelnen Wählbereiche auf Basis einer vorgegebenen Anzahl von entsprechenden Signalpegeln des Ausgangssignals des Positionserkennungssensors 5 bestimmt werden. Die Reihenfolge der Erfassung der Signalpegel bezüglich der Wählbereiche ist dabei unerheblich. Ebenso ist denkbar, daß die Signalpegel-Bänder für die einzelnen Wählbereiche unabhängig voneinander bestimmt und abgespeichert werden. Das heißt das Signalpegel-Band für einen Wählbereich wird bestimmt und abgespeichert, sobald die geforderte Anzahl an Signalpegeln für diesen speziellen Wählbereich abgespeichert wurde. Hierbei ist aber darauf zu achten, daß der Zustandskenner erst dann zurückgesetzt wird, wenn die Signalpegel-Bänder für alle Wählbereiche im nichtflüchtigen Speicher der Steuerelektronik abgespeichert wurden.

Das Verfahren zum Abgleichen eines Positionserkennungssensors wurde beispielhaft für die meßtechnische Bestimmung der korrespondierenden Signalpegel oder Spannungswerte zu allen vorhandenen Wählbereichen P, R, N und D dargestellt. Das erfindungsgemäße Verfahren ist aber auch auf jede Kombination von mindestens zwei der vorhandenen Wählbereiche P, R, N und D anzuwenden. Vorzugsweise werden hierbei die beiden Endstellungen P und D verwendet. Die Signalpegel-Bänder für die nicht meßtechnisch ermittelten Wählbereiche können dann aufgrund der linearen Anordnung der Schaltpunkte berechnet werden. Ebenso ist es möglich, die korrespondierenden Signalpegel oder Spannungswerte nur eines der Wählbereiche meßtechnisch zu erfassen und daraus die Abweichung zu Standardwerten des entsprechenden Wählbereichs zu bestimmen. Diese Abweichung wird dann auf die übrigen Wählbereiche übertragen und die Standardwerte der Wählbereiche dementsprechend korrigiert. Die Standardwerte werden dabei beispielsweise aufgrund von Herstellerangaben und Erfahrungswerten festgesetzt und im nichtflüchtigen Speicher der Steuereleketronik abgelegt.

Um den Abgleichvorgang für den Bediener möglichst komfortabel zu gestalten, ist es vorteilhaft, die Steuerelektronik während des Abgleichvorgangs über eine Diagnoseschnittstelle mit einem Servicegerät zu verbinden. Auf diese Weise kann der Bediener über eine Ausgabeeinheit am Servicegerät über den momentanen Status des Abgleichvorgangs informiert werden und der Abgleichvorgang rechnergesteuert durchgeführt werden. Hierbei kann dem Bediener beispielsweise in Form einer Art Bedienungsanleitung mitgeteilt werden, wenn ein Signalpegel für die momentan eingelegte Schaltstellung erfolgreich abgespeichert wurde und somit eine neue Schaltstellung eingelegt werden soll. Ebenso kann auch der erfolgreiche Abschluß des Abgleichvorgangs rückgemeldet werden.

Weist die Steuerelektronik 4 keine derartige Diagnoseschnittstelle auf oder steht ein derartiges Servicegerät nicht zur Verfügung ist durch den Bediener darauf zu achten, daß der Wählhebel zumindest solange in einer Schaltstellung verweilt, z.B. 1 s, daß sichergestellt ist, daß der Signalpegel des Ausgangssignals des Positionserkennungssensors 5 für die vorgegebene Zeitdauer konstant anliegt und somit der entsprechende Signalpegel im flüchtigen Speicher der Steuerelektronik 4 abgelegt wird.

Die Erfindung wurde beispielhaft für ein Getriebesteuergerät erläutert, das direkt in das Automatikgetriebe integriert ist. Ebenso ist die Erfindung aber auch für sogenannte "Stand -alone-Einheiten" anwendbar.

Das Abgleichen eines analogen Positionserkennungsssensors während der Fahrzeugfertigung oder nach einem Ersatzteilaustausch bietet den großen Vorteil, daß Einbautoleranzen im Getriebe und Fahrzeug mit geringen Aufwand weitgehend eliminiert werden. Durch Verwendung eines analogen Positionserkennungssensors in Verbindung mit dem erfindungsgemäßen Verfahren zum Abgleichen können die Wählbereiche eines Automatikgetriebes im Gegensatz zu digitalen Positionserkennungssensoren weitgehend unabhängig von Toleranzen des Gesamtsystems sehr genau erfaßt werden.

## Patentansprüche

1. Elektronisches Steuergerät für ein Kraftfahrzeug-Automatikgetriebe mit
- einem Gehäuse (1),
- einer im Gehäuse (1) untergebrachten Steuerelektronik (4) zum Steuern des Automatikgetriebes,
- einem im Gehäuse (1) untergebrachten Positionserkennungssensor (5) zum Erfassen der Position eines Wählschiebers (10),
wobei der Positionserkennungssensor (5)
- ein analoges, von der Position des Wählschiebers (10) abhängiges Ausgangssignal (U_{A}) liefert und
- mit Hilfe eines Kalibrierprogramms in der Steuerelektronik (4) statisch abgeglichen wird,
wobei in der Steuerelektronik (4) ein Zustandskenner vorgesehen ist, der den Kalibrierzustand des Positionserkennungssensors (5) ohne Abgleich bzw. mit Abgleich repräsentiert, wobei zum Abgleichen des Positionserkennungssensors (5) in der Steuerelektronik (4) das Kalibrierprogramm hinterlegt ist, das folgende Schritte umfasst:
- Auswahl eines Wählbereichs über den Wählhebel (S1);
- Bestimmung des Wählbereichs des Wahlschiebers (S2);
- Ablegen des Signalpegels in einem flüchtigen Speicher der Steuerelektronik (4) (S3);
- Wiederholung der Schritte S1 bis S3, bis zumindest für zwei Wählbereiche jeweils eine vorgegebene Anzahl abgespeicherter Signalpegel im nichtflüchtigen Speicher der Steuerelektronik vorliegt (S4);
- Bestimmung der Signalpegel-Bänder auf der Basis der gespeicherten Werte (S5);
- Speicherung der ermittelten Signalpegel-Bänder im nichtflüchtigen Speicher der Steuerelektronik (S6);
- Rücksetzen des Zustandskenners in der Steuerelektronik (4), wenn für alle Wählbereiche (P, R, N, D) Signalpegelbänder im nicht flüchtigen Speicher der Steuerelektronik (4) abgelegt sind.

2. Steuergerät nach Anspruch 1, **dadurch gekennzeichnet, dass** ein Gebermagnet unmittelbar auf dem Wählschieber (10) angeordnet ist.

3. Steuergerät nach Anspruch 1 oder 2, **dadurch gekennzeichnet, dass** der Ausgang des Positionserkennungssensors (5) als redundante Differenzschnittstelle ausgeführt ist, die neben dem Ausgangssignal (U_{A}) ein Komplementär-Signal (U_{AK}) liefert.

4. Steuergerät nach einem der vorhergehenden Ansprüche, **dadurch gekennzeichnet, dass** der Positionserkennungssensor (5) als PLCD (permanentmagnetic linear contactless displacementsensor) ausgebildet ist.

5. Verfahren zum Abgleichen eines Positionserkennungssensors (5) in einem elektronischen Steuergerät für ein Kraftfahrzeug-Automatikgetriebe, der abhängig von der Position eines Wählschiebers (10) ein analoges Ausgangssignal liefert, bei dem
a) einer der Wählbereiche (P, R, N, D) angewählt wird,
b) bestimmt wird, in welchem der Wählbereiche (P, R, N D) sich der Wählschieber (10) befindet,
c) der Signalpegel des Ausgangssignals des Positionserkennungssensors (5) bestimmt und in einem Speicher einer Steuerelektronik (4) abgelegt wird,
wobei die Schritte a) bis c) sooft wiederholt werden, bis zumindest für zwei der Wählbereiche (P, D) jeweils eine vorgegebene Anzahl an Signalpegeln gespeichert ist, und bei dem
d) auf Basis der gespeicherten Signalpegel Signalpegel-Bänder für die mindestens zwei Wählbereiche (P, D) bestimmt und in einem nichtflüchtigen Speicher der Steuerelektronik (4) abgelegt werden und
e) auf Basis der gespeicherten Signalpegel Signalpegel-Bänder für die übrigen Wählbereiche (R, N) berechnet werden und ebenfalls im nichtflüchtigen Speicher der Steuerelektronik (4) abgelegt werden,
f) ein Zustandskenner in der Steuerelektronik (4) zurückgesetzt wird, wenn für alle Wählbereiche (P, R, N, D) Signalpegel-Bänder im nichtflüchtigen Speicher der Steuerelektronik (4) abgelegt sind.

## Claims

1. Electronic control device for a motor vehicle automatic transmission having
- a housing (1),
- an electronic control system (4) which is accommodated in the housing (1) and has the purpose of controlling the automatic transmission,
- a position-detection sensor (5) which is accommodated in the housing (1) and has the purpose of sensing the position of a gear selector slide (10), the position detection sensor (5)
- supplying an analogue output signal (U_{A}) which is dependent on the position of the gear selector slide (10), and
- being statically adjusted using a standardization program in the electronic control system (4),
a state identifier which represents the standardization state of the position-detection sensor (5) without or with adjustment being provided in the electronic control system (4), and the standardization program being stored in the electronic control system (4) in order to adjust the position-detection sensor (5), said program comprising the following steps:
- a gear selection range is selected by means of the gear selector lever (S1);
- the gear selection range of the gear selector slide is determined (S2);
- the signal level is stored in a volatile memory of the electronic control system (4) (S3);
- the steps S1 to S3 are repeated until a predefined number of stored signal levels is present in the non-volatile memory of the electronic control system at least for each of two gear selection ranges (S4);
- the signal level bands are determined on the basis of the stored values (S5);
- the signal level bands which are determined are stored in the non-volatile memory of the electronic control system (S6) ;
- the state identifier is reset in the electronic control system (4) if signal level bands are stored in the non-volatile memory of the electronic control system (4) for all the gear selection ranges (P, R, N, D).

2. Control device according to Claim 1, **characterized in that** a signal transmitter magnet is arranged directly on the gear selector slide (10).

3. Control device according to Claim 1 or 2, **characterized in that** the output of the position-detection sensor (5) is embodied as a redundant difference interface which supplies both the output signal (U_{A}) and a complementary signal (U_{AK}) .

4. Control device according to one of the preceding claims, **characterized in that** the position-detection sensor (5) is embodied as a PLCD (permanent magnetic linear contactless displacement sensor).

5. Method for adjusting a position-detection sensor (5) in an electronic control device for a motor vehicle automatic transmission which supplies an analogue output signal as a function of the position of a gear selector slide (10), in which method
a) one of the gear selection ranges (P, R, N, D) is selected,
b) it is determined which of the gear selection ranges (P, R, N, D) the gear selector slide (10) is located in,
c) the signal level of the output signal of the position-detection sensor (5) is determined and stored in a memory of an electronic control system (4),
the steps a) to c) being repeated until a predefined number of signal levels is stored at least for each of two of the gear selection ranges (P, D), and in which method
d) signal level bands for the at least two gear selection ranges (P, D) are determined on the basis of the stored signal levels and are stored in a non-volatile memory of the electronic control system (4), and
e) signal level bands for the other gear selection ranges (R, N) are calculated on the basis of the stored signal levels and are also stored in the non-volatile memory of the electronic control system (4),
f) a state identifier in the electronic control system (4) is reset if signal level bands are stored in the non-volatile memory of the electronic control system (4) for all the gear selection ranges (P, R, N, D).

## Revendications

1. Dispositif de commande électronique pour une boîte de vitesses automatique d'un véhicule automobile, comprenant
- un boîtier (1),
- une électronique de commande (4) logée dans le boîtier (1), pour commander la boîte de vitesses automatique,
- un détecteur de position (5) logé dans le boîtier (1), pour détecter la position d'un coulisseau de sélection (10), le détecteur de position (5)
- délivrant un signal de sortie analogique (U_{A}) dépendant de la position du coulisseau de sélection (10) et
- étant statiquement aligné à l'aide d'un programme de calibrage dans l'électronique de commande (4), un identificateur d'état représentant l'état de calibrage du détecteur de position (5), sans alignement ou avec alignement étant prévu, et pour l'alignement du détecteur de position (5) dans l'électronique de commande (4), un programme de calibrage étant sauvegardé, qui comprend les étapes suivantes:
- sélection d'une plage de sélection par l'intermédiaire du levier de sélection (S1) ;
- détermination de la plage de sélection du coulisseau de sélection (S2) ;
- sauvegarde du niveau de signaux dans une mémoire volatile de l'électronique de commande (4) (S3) ;
- répétition des étapes S1 à S3, jusqu'à ce que pour au moins deux plages de sélection, on dispose d'un nombre prédéfini de niveaux de signaux mémorisés dans la mémoire non volatile de l'électronique de commande (S4) ;
- détermination des bandes de niveaux des signaux sur la base des valeurs mémorisées (S5) ;
- mémorisation des bandes de niveaux de signaux déterminées dans la mémoire non volatile de l'électronique de commande (S6) ;
- remise à zéro de l'identificateur d'état dans l'électronique de commande (4), lorsque pour toutes les plages de sélection (P, R, N, D) des bandes de niveaux de signaux sont sauvegardées dans la mémoire non volatile de l'électronique de commande.

2. Dispositif de commande selon la revendication 1, **caractérisé en ce qu'**un aimant transmetteur est disposé directement sur le coulisseau de sélection (10).

3. Dispositif de commande selon la revendication 1 ou 2, **caractérisé en ce que** la sortie du détecteur de position (5) est réalisée en tant qu'interface redondante, qui hormis le signal de sortie (U_{A}), délivre un signal complémentaire (U_{Ak}).

4. Dispositif de commande selon l'une quelconque des revendications précédentes, **caractérisé en ce que** le détecteur de position (5) est conçu en tant que PLCD (permanentmagnetic linear contactless displacementsensor).

5. Procédé d'alignement d'un détecteur de position (5) dans un dispositif de commande électronique pour une boîte de vitesses automatique d'un véhicule automobile, qui en fonction de la position d'un coulisseau de sélection (10) délivre un signal de sortie analogique, dans lequel
a) on sélectionne l'une des plages de sélection (P, R, N, D),
b) on détermine dans laquelle des plages de sélection (P, R, N D) se trouve le coulisseau de sélection (10),
c) on détermine le niveau du signal de sortie du détecteur de position (5) et on le sauvegarde dans une mémoire d'une électronique de commande (4),
les étapes a) à c) étant répétées jusqu'à ce que pour au moins deux des plages de sélection (P, D), chaque fois un nombre prédéfini de niveaux de signaux soit mémorisé et dans lequel
d) sur la base des niveaux de signaux mémorisés, des bandes de niveaux de signaux pour les au moins deux plages de sélection (P, D) sont sauvegardées dans une mémoire non volatile de l'électronique de commande (4) et
e) sur la base des niveaux de signaux mémorisés, des bandes de niveaux de signaux pour les plages de sélection restantes (R, N) sont calculées et également sauvegardées dans la mémoire non volatile de l'électronique de commande (4),
f) un identificateur d'état dans l'électronique de commande (4) est remis à zéro, lorsque pour toutes les plages de sélection (P, R, N, D) des bandes de niveaux de signaux sont sauvegardées dans la mémoire non volatile de l'électronique de commande (4)
